(19) Europäisches Patentamt
European Patent Office
Office européen des brevets

(11) **EP 4 022 336 B1**

(12) **EUROPEAN PATENT SPECIFICATION**

(45) Date of publication and mention
of the grant of the patent:
**07.08.2024 Bulletin 2024/32**

(21) Application number: **19766117.6**

(22) Date of filing: **27.08.2019**

(51) International Patent Classification (IPC):
*G01S 5/00* (2006.01)    *G01S 5/02* (2010.01)
*G01S 13/74* (2006.01)    *G01S 13/87* (2006.01)
*H04W 56/00* (2009.01)    *H04W 64/00* (2009.01)

(52) Cooperative Patent Classification (CPC):
**H04W 64/006; G01S 5/0081; G01S 5/02213;
G01S 5/0249; G01S 13/74; G01S 13/878;
H04W 56/0025**

(86) International application number:
**PCT/SE2019/050797**

(87) International publication number:
**WO 2021/040586 (04.03.2021 Gazette 2021/09)**

(54) **POSITION ESTIMATION FOR EMITTERS OUTSIDE LINE OF SIGHT OF FIXED NETWORK NODES**

POSITIONSSCHÄTZUNG FÜR SENDER AUSSERHALB DER SICHTLINIE VON FESTEN NETZWERKKNOTEN

ESTIMATION DE POSITION POUR ÉMETTEURS À L'EXTÉRIEUR D'UNE LIGNE DE VISÉE DE N UDS DE RÉSEAU FIXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.07.2022 Bulletin 2022/27**

(73) Proprietor: **TELEFONAKTIEBOLAGET LM
ERICSSON (PUBL)
164 83 Stockholm (SE)**

(72) Inventors:
• **DWIVEDI, Satyam
170 62 SOLNA (SE)**
• **VYAS, Avneesh
174 41 SUNDBYBERG (SE)**
• **ASPLUND, Henrik
117 34 STOCKHOLM (SE)**
• **LIN, Xingqin
SANTA CLARA, California 95054 (US)**

(74) Representative: **Zacco Sweden AB
P.O. Box 5581
Löjtnantsgatan 21
114 85 Stockholm (SE)**

(56) References cited:
**WO-A2-2004/019559**    **US-A1- 2008 103 696
US-A1- 2011 143 770**

**Description**

Technical Field

The present disclosure relates to a wireless communication network, and, in particular, to obtaining positioning measurements for user equipment through at least one mobile node of the wireless communication network.

Background

Wireless communication networks, such as cellular networks, enable various human-and machine-centric services, including providing positioning measurement reporting of user devices for various purposes. Future wireless communication networks will include mobile base stations and/or network access points (e.g., aerial base stations with adaptive altitudes, and/or base stations mounted on ground vehicles, as non-limiting examples) to provide radio connectivity. Such mobile radio network nodes can extend radio coverage to areas in which accessing mobile networks with fixed access points is difficult or impossible at present. Mobile radio network nodes are also relevant for locations and scenarios in which network access demand varies significantly over time (e.g., in a stadium, a shopping mall, a factory, an underground mine, a seaport, or a remote natural resource exploration and extraction site). Such mobile radio network nodes can also be useful to meet special quality of service (QoS) demands of users requiring accurate positioning and localization and/or users requiring communications that are highly secure, extremely reliable, and/or very high-speed communication.

The network of mobile radio network nodes can also include moving relays, which extend access to users that are difficult to reach otherwise in a cost-efficient way. Current wireless communication networks already provide relays, and enable links between relays in a manner similar to device-to-device (D2D) and vehicle-to-vehicle (V2V) sidelinks. Additionally, D2D and V2V positioning techniques and technologies are presently emerging.

Future networks will also provide connectivity to humans and devices aloft, such as drones and/or passengers in an airplane, as non-limiting examples. Positioning of such users is also important. To this end, the 3rd Generation Partnership Project (3GPP) has approved a new study item on enhanced support for aerial vehicles in its Technical Specification Group (TSG) Radio Access Network (RAN) #75 plenary meeting. In terms of Long-Term Evolution (LTE) enhancements, positioning for aerial vehicles is one objective of the study item.

Small-cell solutions have traditionally targeted enhancing mobile network data rates in dense urban areas (mainly indoor locations such as stadiums, shopping malls, and the like) with high capacity demands. Motivated by operator obligations to reach 100% coverage in rural areas, another approach to the use of small cells has emerged. In this approach, mobile small cells (e.g., drones and/or balloons) are used, with drones being more suited to situations requiring fast deployment and/or situations where there are only a limited number of subscribers, while balloons may be appropriate in situations in which a slower deployment is acceptable, but a better deployment footprint is required.

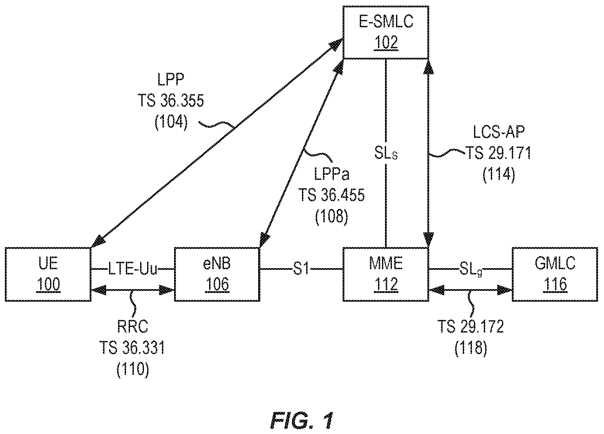

Positioning in LTE is supported by the architecture illustrated in Figure 1. As seen in Figure 1, direct interactions between a user equipment (UE) 100 and a location server (i.e., an Evolved Serving Mobile Location Center, or E-SMLC) 102 are enabled via the LTE Positioning Protocol (LPP) (defined in 3GPP Technical Specification (TS) 36.355 [1]), as indicated by arrow 104. Moreover, there are also interactions between the E-SMLC 102 and the eNodeB (eNB) 106 via the LPPa protocol (defined in 3GPP TS 36.455 [2]), as indicated by arrow 108. The interactions between the E-SMLC 102 and the eNB 106 may be supported to some extent by interactions between the eNB 106 and the UE 100 using an LTE-Uu interface via the Radio Resource Control (RRC) protocol (defined by 3GPP TS 36.331 [3]), as indicated by arrow 110. Additionally, the E-SMLC 102 and mobility management entity (MME) 112 interact using an $SL_s$ interface via the Location Services Application (LCS-AP) protocol (defined in 3GPP TS 29.171 [4]), as indicated by arrow 114. Likewise, the MME 112 and a gateway mobile location center (GMLC) 116 interact using an $SL_g$ interface (defined in 3GPP TS 29.172 [5]), as indicated by arrow 118.

In addition to the protocols and interfaces shown in Figure 1, the following positioning techniques are considered in LTE, as described in 3GPP TS 36.305 [6]:

- Enhanced Cell ID, which provides cell identifier (ID) information to associate a UE with a serving area of a serving cell, and also provides additional information to determine a finer granularity position;
- Assisted Global Navigation Satellite System (GNSS), in which GNSS information is retrieved by a UE and supported by assistance information provided to the UE from an E-SMLC.
- Observed Time Difference of Arrival (OTDOA), in which a UE estimates the time difference of reference signals from different base stations, and sends time difference data to an E-SMLC for multilateration; and
- Uplink Time Difference of Arrival (UTDOA), in which a UE is requested to transmit a specific waveform that is detected by multiple location measurement units (e.g., an eNB) at known positions, which then forward the measurements to an E-SMLC for multilateration.

However, non-line-of-sight (NLOS) situations are known to present challenges in the context of wireless positioning. There are presently no commercial solutions available to address such challenges and still provide sufficiently precise positioning, particularly in view of the tight expected positioning requirements in 5G wireless communication networks, such as a New Radio (NR) network. Additionally, in rural areas, one challenging issue for wireless communication network positioning is the sparse network deployment resulting in very large inter-site distance (ISD) between macro cells. While GNSS positioning may provide initial positioning functionality, GNSS receivers often are expensive in terms of cost and energy consumption. Further, the precision GNSS positioning provides may be too imprecise to manage a UE whose only network connectivity is through one or more mobile access points.

US20080103696A1 seems to disclose an ad-hoc system for determining the location of a target.

WO2004019559A2 provides location finding within a wireless network, such as a WLAN (e.g., IEEE 802.11) or WPAN network, by determining, by the BS, a time-difference-of-arrival (TDOA) profile for signals received from wireless devices connected to or attempting to connect to the wireless network.

US20110143770A1 discloses a method for determining the RSTD of a direct path between the PRS-transmitting (serving) eNB and the UE.

Summary

The invention is defined by the independent claims. Furthermore, the embodiments of the invention are those defined by the claims. The implementations designated as embodiments in this Summary section not being according to the invention, are included to facilitate the understanding of the invention

Embodiments of a method implemented in a mobile radio network node are disclosed herein. In some embodiments, the method implemented in the mobile radio network node comprises performing, together with two or more additional nodes, at least one of which is another mobile radio network node, one or more procedures. The one or more procedures estimate a position of the mobile radio network node and positions of the two or more additional nodes. The one or more procedures also synchronize timing of the mobile radio network node relative to the two or more additional nodes. The method further comprises performing a measurement on a signal from a transmitting node, the measurement being a time of arrival (TOA) of the signal at the mobile radio network node. The method further comprises performing one or more actions that use the measurement.

In some embodiments, the position of the mobile radio network node and the positions of the two or more additional nodes comprise relative positions. In some embodiments, the position of the mobile radio network node and the positions of the two or more additional nodes comprise absolute positions.

In some embodiments, performing the one or more actions comprises providing the measurement to at least one other node for the at least one other node to calculate a position of the transmitting node. In some embodiments, performing the one or more actions comprises providing the measurement to a location server for the location server to calculate a position of the transmitting node.

In some embodiments, performing the one or more actions comprises receiving additional measurements from the two or more additional nodes. In some embodiments, performing the one or more actions also comprises calculating a time difference of arrival (TDOA) measurement based on the measurement and the additional measurements. In some embodiments, performing the one or more actions also comprises calculating a position of the transmitting node.

In some embodiments, the one or more procedures to estimate the position and synchronize the timing comprise a precision time protocol (PTP) measurement procedure to make PTP measurements. In some embodiments, the one or more procedures to estimate the position and synchronize the timing comprise using the PTP measurements to estimate clock skew between the mobile radio network node and one of the two or more additional nodes, estimate a time offset between the mobile radio network node and the one of the two or more additional nodes, and determine a distance between the mobile radio network node and the one of the two or more additional nodes.

In some embodiments, the signal from the transmitting node is time synchronized with the mobile radio network node. In some embodiments, the signal from the transmitting node is not time synchronized with the mobile radio network node. In some embodiments, the transmitting node is a user equipment (UE).

In some embodiments, the mobile radio network node is one of a drone, an automobile, a train, a vehicle, or an airplane. In some embodiments, the two or more additional nodes are mobile radio network nodes. In some embodiments, the another mobile radio network node is one of a drone, an automobile, a train, a vehicle, or an airplane. In some embodiments, the two or more additional nodes are drones.

In some embodiments, the method further comprises positioning the mobile radio network node relative to two of the two or more additional nodes such that an equilateral triangle is approximately formed. In some embodiments, the method further comprises moving the mobile radio network node after performing the one or more procedures. In some embodiments, the method further comprises maintaining relative positions between the mobile radio network node and the two or more additional nodes while moving. In some embodiments, the signal comprises an ultrawideband (UWB) signal.

Embodiments of a mobile radio network node configured to communicate with a UE are also disclosed. In some embodiments, the mobile radio network node configured to communicate with the UE comprises a network interface and a processor configured to cause the mobile radio network node to perform the method implemented in a mobile radio network node disclosed herein.

Embodiments of a method implemented in a mobile radio network node to locate a UE are also disclosed herein. In some embodiments the method comprises establishing a position estimate relative to at least two other network nodes. The method further comprises synchronizing a time estimate with the at least two other network nodes. The method further comprises transmitting a position signal from the mobile radio network node to the UE. The method further comprises receiving a responsive position signal from the UE.

In some embodiments, the responsive position signal includes a calculated position of the UE. In some embodiments, the responsive position signal includes a measurement of the position signal and the method further comprises calculating at the mobile radio network node the position of the UE. In some embodiments, the responsive position signal includes a measurement of the position signal and the method further comprises sending the responsive position signal to a location server to calculate the position of the UE.

Embodiments of a mobile radio network node configured to communicate with a UE are also disclosed. In some embodiments, the mobile radio network node configured to communicate with the UE comprises a network interface and a processor configured to perform the method implemented in a mobile radio network node to locate a UE disclosed herein.

Brief Description of the Drawings

The accompanying drawing figures incorporated in and forming a part of this specification illustrate several aspects of the disclosure, and together with the description serve to explain the principles of the disclosure.

Figure 1 is a block diagram illustrating exemplary protocols and interfaces employed by Long-Term Evolution (LTE) wireless communication networks for providing architectural support for positioning;
Figure 2 illustrates one example of a cellular communication network according to some embodiments of the present disclosure;
Figure 3 is a block diagram illustrating establishment of a multi-hop route between fixed base stations and a user equipment (UE) using multiple mobile radio network nodes;
Figure 4 is a simplified diagram of a cellular network using Observed Time Difference of Arrival (OTDOA) multilateration to determine positions of a UE within the cellular network;
Figure 5 is a simplified diagram of a cellular network using uplink TDOA multilateration to determine positions of a UE within the cellular network;
Figure 6 is a simplified diagram of a cellular network with mobile nodes practicing time synchronization and relative positioning to determine a position of a UE within the cellular network;
Figure 7 is a simplified illustration of multilateration location of a UE using plural mobile nodes that are time synchronized and whose relative positions are known;
Figures 8A and 8B are flowcharts of alternate processes used by mobile nodes of a cellular network to assist in determining a position of a UE;
Figures 9A-9C are flowcharts of alternate processes used by a UE to assist in determining a position of the UE with mobile nodes of a cellular network;
Figure 10 is a schematic block diagram of a radio access node according to some embodiments of the present disclosure;
Figure 11 is a schematic block diagram that illustrates a virtualized embodiment of the radio access node of Figure 10 according to some embodiments of the present disclosure;
Figure 12 is a schematic block diagram of the radio access node of Figure 10 according to some other embodiments of the present disclosure;
Figure 13 is a schematic block diagram of a UE according to some embodiments of the present disclosure; and
Figure 14 is a schematic block diagram of the UE of Figure 13 according to some other embodiments of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long-Term Evolution (LTE) network), a high-power or macro base station, a low-power base station (e.g., a micro base station, a pico base station, a home eNB, or the like), and a relay node. It should be appreciated that a radio access node can be in a fixed location such as a cellular tower with associated base station or may be mobile such as a drone with base station functionality associated therewith. As used herein, such mobile radio access nodes are referred to as "mobile radio network nodes."

**Core Network Node:** As used herein, a "core network node" is any type of node in a core network or any node that implements a core network function. Some examples of a core network node include, e.g., a Mobility Management Entity (MME), a Packet Data Network Gateway (PGW), a Service Capability Exposure Function (SCEF), a Home Subscriber Server (HSS), or the like. Some other examples of a core network node include a node implementing a Access and Mobility Function (AMF), a UPF, a Session Management Function (SMF), an Authentication Server Function (AUSF), a Network Slice Selection Function (NSSF), a Network Exposure Function (NEF), a Network Repository Function (NRF), a Policy Control Function (PCF), a Unified Data Management (UDM), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

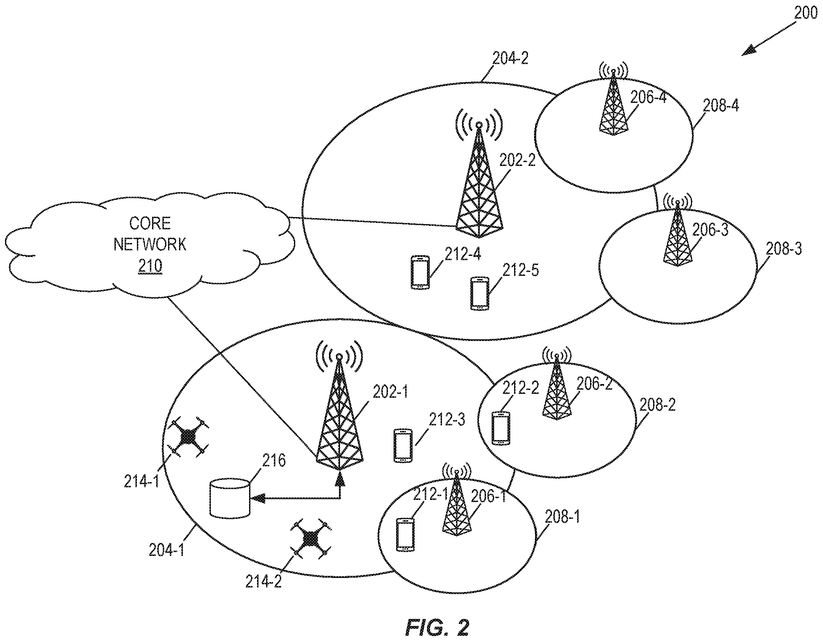

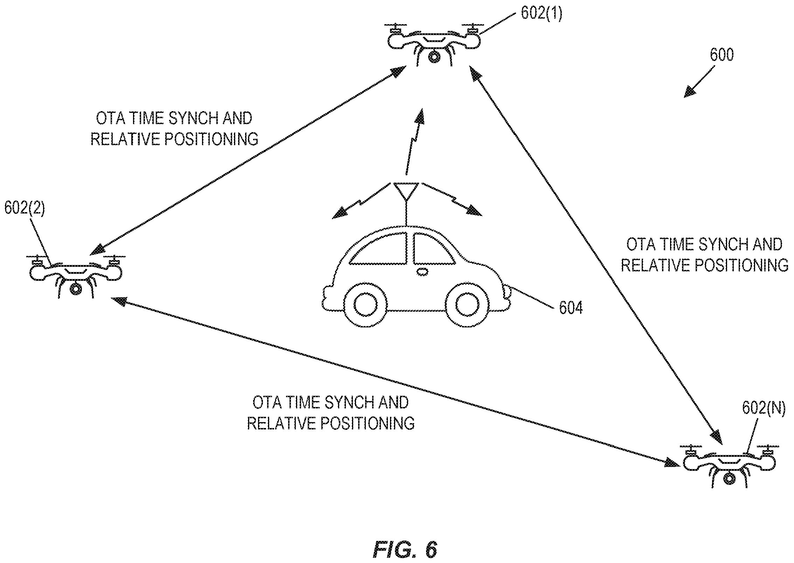

Systems and methods for position estimation for emitters outside line of sight of fixed network nodes are disclosed herein. Before addressing particulars of the present disclosure, an overview of cellular networks in which such systems and methods may be used is provided as well as an explanation of multilateration techniques such as time of arrival (TOA) and time difference of arrival (TDOA) with reference to Figures 2 through 5. A discussion of exemplary aspects of the present disclosure begins below with reference to Figure 6.

In this regard, Figure 2 illustrates one example of a wireless communication network 200 (e.g., a cellular communication network) according to some embodiments of the present disclosure. In some embodiments, the wireless communication network 200 is an LTE network or a 5G NR network. In this example, the wireless communication network 200 includes base stations 202-1 and 202-2, which in LTE are referred to as eNBs and in 5G NR are referred to as gNBs, controlling corresponding macro cells 204-1 and 204-2. The base stations 202-1 and 202-2 are generally referred to herein collectively as base stations 202 and individually as base station 202. The base stations 202 are network nodes as well as radio access nodes. It should be appreciated that in many instances the base stations 202 are fixed and thus may be referred to as a fixed radio access node or fixed network node. Likewise, the macro cells 204-1 and 204-2 are generally referred to herein collectively as macro cells 204 and individually as macro cell 204. The wireless communication network 200 may also include a number of low-power nodes 206-1 through 206-4 controlling corresponding small cells 208-1 through 208-4. The low-power nodes 206-1 through 206-4 can be small base stations or Remote Radio Heads, or the like. Notably, while not illustrated, one or more of the small cells 208-1 through 208-4 may alternatively be provided by the base stations 202. The low-power nodes 206-1 through 206-4 are generally referred to herein collectively as low-power nodes 206 and individually as low-power node 206. Likewise, the small cells 208-1 through 208-4 are generally referred to herein collectively as small cells 208 and individually as small cell 208. The base stations 202 are connected to a core network 210.

The base stations 202 and the low-power nodes 206 provide service to wireless devices 212-1 through 212-5 in the corresponding cells 204 and 208. The wireless devices 212-1 through 212-5 are generally referred to herein collectively as wireless devices 212 and individually as wireless device 212. In many situations, the wireless devices 212 are mobile terminals owned and/or operated by users, and thus, the wireless devices 212 are also sometimes referred to herein as user equipment or UEs. As noted above, the wireless devices 212 are radio nodes. The base stations 202 may also be communicatively coupled to a location server (i.e., an Evolved Serving Mobile Location Center, or E-SMLC), such as the location server 216. The location server 216 is configured to collect positioning measurements and other location information from, e.g., the base stations 202, the wireless devices 212, and/or other devices within the wireless communication network 200, and assisting the devices with positioning measurements and estimations.

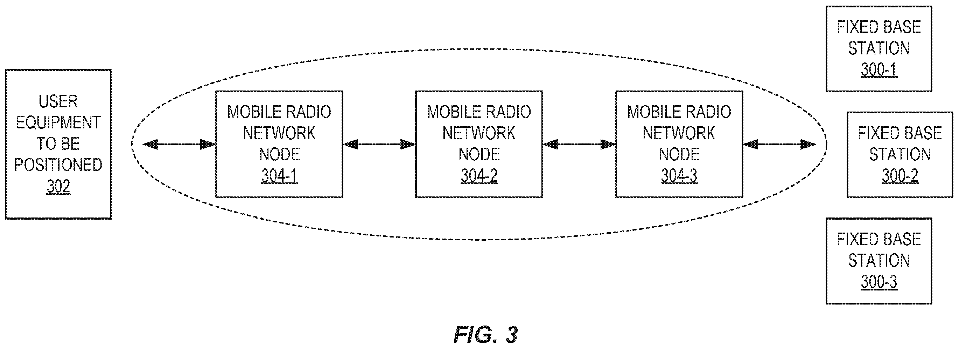

To address the challenges described above with respect to, e.g., non-line-of-sight (NLOS) scenarios and/or sparse network deployment with large inter-site distance (ISD) between macro cells, one or more mobile radio network nodes 214 (e.g., mobile radio network nodes 214-1 and 214-2, also sometimes referred to as a mobile network node or as simply a mobile node) are provided for positioning purposes. Each of the mobile radio network nodes 214 is equipped with a small cell and is connected via wireless backhaul to the wireless communication network 200 (e.g., via a macro cell, or via another of the mobile radio network nodes 214). The mobile radio network nodes 214 each provide a relay between base stations (e.g., the base stations 202) and mobile units (i.e., the wireless devices 212) for positioning purposes, and thus can provide mobile node positioning in spite of an NLOS link between mobile units and base stations. In some embodiments, multiple mobile radio network nodes 214 may connect to each other in sequence to create a chain of relays providing a multi-hop route between the base stations 202 and the wireless devices 212. Multi-hop routes and factors affecting their establishment and positioning measurements are discussed in greater detail below with respect to Figure 3..

The use of a set of mobile radio network nodes 214 acting as moving access points and/or moving relays enables the degree of freedom in their mobility to be used to accurately determine a position of a particular user or group of users of the wireless devices 212 and/or a position of other moving access points and relays. For example, a multi-hop connection can be established between moving access points and relays, taking into account positioning requirements of users, relays, and access points, their sensing and measuring capabilities, and other quality of service (QoS) requirements that may exist. An illustration is shown in Figure 3, which illustrates establishment of a multi-hop route between fixed base stations 300-1 through 300-3 and a UE 302 using multiple mobile radio network nodes 304-1 through 304-3 (e.g., the mobile radio network nodes 214 of Figure 2, as non-limiting examples).

The accuracy of radio-based positioning techniques (e.g., based on time of arrival and angle of arrival of radio signals) relies heavily on the reception of sufficiently strong line-of-sight (LOS) signals at the receiving device or node. Consequently, positioning accuracy may be significantly degraded in the absence of LOS signal reception. This is different from other QoS requirements, where absence of LOS is often not a major issue because several reflected signals, when combined properly, can enhance performance.

Therefore, a multi-hop route, such as that illustrated in Figure 3, that is established with positioning requirements in mind may be very different from a multi-hop route that is established to satisfy other QoS requirements for communication. The criteria for establishing (and dynamically re-establishing) a multi-hop route between mobile radio network nodes may include consideration of the following:

- Required positioning accuracy of the mobile radio network nodes to be positioned;
- Radio propagation conditions (e.g., achieving LOS signal receptions between mobile radio network nodes);
- Sensing capabilities of mobile radio network nodes (e.g., provision of different sensors and their measurement performance, wherein the sensors can be of various types such as sensors for vision, radio signal reception, inertial, magnetic field measurement, and/or air pressure measurement, and the like);
- Radio signal transmission and reception capabilities (e.g., transceivers equipped with different antenna capabilities for transmission and/or reception);
- Availability of anchor points in the environment (e.g., signatures placed in the environment to support highly accurate positioning of some mobile radio network nodes in the multi-hop route, through sensors such as cameras);
- Constraints associated with mobility of mobile radio network nodes, given that some mobile radio network nodes have higher flexibility (e.g., flying mobile radio network nodes in the air);
- Network geometry (e.g., geometric dilution of precision for trilateration-based techniques like the Observed Time Difference of Arrival (OTDOA) positioning method employed in LTE);
- Diversity and density of mobile radio network nodes to be positioned;
- Availability of reliable power source to mobile radio network nodes (e.g., battery life and battery recharge capability using techniques such as energy harvesting); and
- Other QoS requirements.

Once a multi-hop route is established, positioning measurements can be reported to the wireless communication network in various ways. Selection of an appropriate measurement reporting protocol can depend on factors such as the following:

- Which mobile radio network nodes in the network accurately know their own position;
- Whether a positioning request is initiated by the wireless communication network (e.g., the wireless communication network wants to know where mobile radio network nodes and/or UE are located), by a mobile radio network node that is requesting to be positioned (e.g., a mobile radio network node wants to know where it is located), or by an external entity (e.g., a UE may request to be positioned);

- Whether a multi-hop route can be reconfigured before measurement reporting is complete (which would require checking that reporting is done even if route is reconfigured); and
- Any positioning requirements that impact granularity of the measurement report and reliability of the reporting protocol.

In some wireless communication networks, various types of multilateration processes may be employed to assist in determining location. Multilateration is a positioning technique based on measurement of time of arrival (TOA) of energy waves having a known propagation speed. The time it takes a signal to arrive from an emitter multiplied by the known propagation speed results in an approximate range in a circle around the emitter. When a second emitter, spaced apart from the first emitter, is added to the system, the respective range circles may intersect at one or more locations. The receiver must necessarily be present at one of these intersections. By extension, a two-dimensional location can be isolated with three emitters, and a three-dimensional location can be isolated with four emitters.

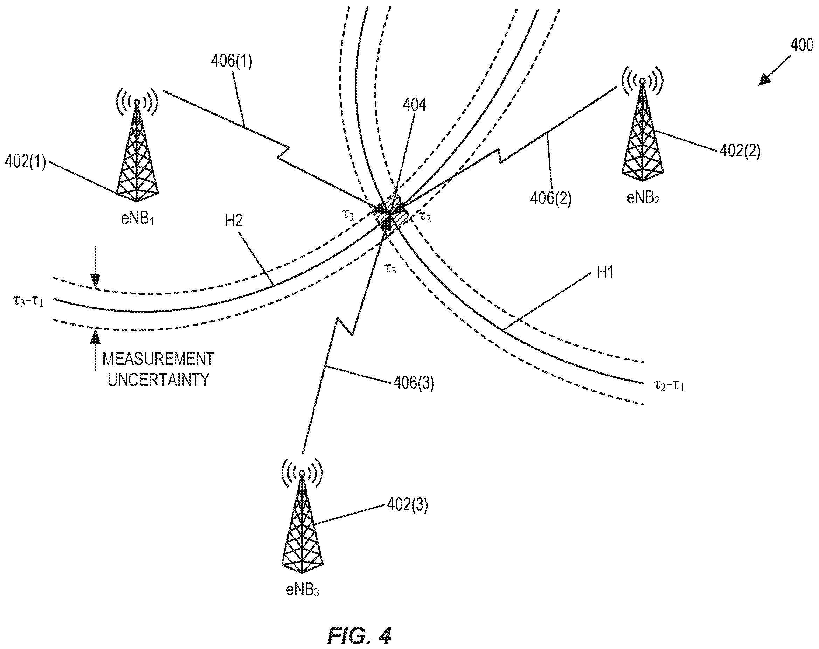

A brief overview of multilateration is provided with reference to Figure 4. Specifically, if there is a network 400 with at least three synchronized transmitting nodes 402(1)-402(3) (here the transmitting nodes 402(1)-402(3) are radio access nodes or base stations such as base stations 212) and a UE (synchronized with the transmitting nodes 402(1)-402(3)) at position 404, the position 404 may be determined. In particular, it takes time $\tau_1$ for a signal 406(1) to travel from the transmitting node 402(1) to position 404. If the propagation speed of the signal 406(1) is known, this time $\tau_1$ corresponds to a distance (or radius) from the transmitting node 402(1). The UE at the position 404 may determine $\tau_1$ if the transmitting node 402(1) includes a transmission start time in the signal 406(1). Similarly, it takes time $\tau_2$ for signal 406(2) to travel from the transmitting node 402(2) to the position 404. Time $\tau_2$ multiplied by the propagation speed of the signal 406(2) corresponds to a second distance (or radius) from the transmitting node 402(2). The UE at the position 404 may determine $\tau_2$ if the transmitting node 402(2) includes a transmission start time in the signal 406(2). The circles intersect in two locations. Similarly, it takes time $\tau_3$ for signal 406(3) to travel from the transmitting node 402(3) to the position 404. Time $\tau_3$ multiplied by the propagation speed of the signal 406(3) corresponds to a third distance (or radius) from the transmitting node 402(3). The UE at the position 404 may determine $\tau_3$ if the transmitting node 402(3) includes a transmission start time in the signal 406(3). This third distance allows position 404 to be discriminated between the two intersections of the first two circles.

Alternatively, instead of just simple TOA measurements, observed time difference of arrival (OTDOA or sometimes just TDOA) measurements can be made by the UE at position 404. The UE measures TOA for the signals 406(1)-406(3) and subtracts measured TOA values from that of a reference (in this case $\tau_1$) to calculate the TDOA. Each TDOA corresponds to a hyperbola (e.g., H1 and H2, respectively) in two dimensions. Due to various signaling noises, there is some uncertainty in the measurements, and therefore, H1 and H2 are thought to have some uncertain region, denoted by the dotted lines in Figure 4. As with the TOA, the intersection, in this case the intersection of hyperbolas H1 and H2, identifies the region of the UE's location.

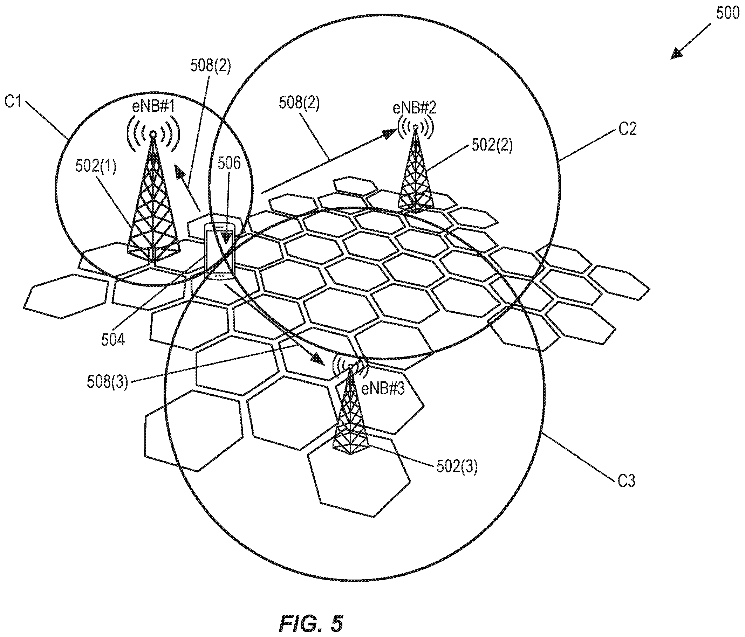

As illustrated in Figure 5, some systems use uplink TDOA for position determination instead of the downlink TDOA illustrated in Figure 4. One such uplink TDOA system is a system 500, which includes three receiving network nodes 502(1)-502(3). The receiving network nodes 502(1)-502(3) are radio access nodes or base stations such as base stations 212. A UE 504 is at position 506 and sends signals 508(1)-508(3) to the three receiving network nodes 502(1)-502(3). The receiving network nodes 502(1)-502(3) can perform TOA measurements on the signals 508(1)-508(3) to determine how far the UE 504 is from a given receiving network node 502(1)-502(3) (e.g., circles C1, C2, and C3) to determine the intersection of the circles C1, C2, and C3. Alternatively, the TOA measurements may be provided to a central location server (e.g., the location server 216 of Figure 2) and TDOA calculations performed to determine the position 506.

The benefit of doing a measurement at the receiving network nodes 502(1)-502(3) is that the UE 504 does not require LTE or GPS functionality, which allows a broader range of UEs to be located. Further, note that in an uplink multilateration system, the UE 504 does not have to be synchronized with the network because the TDOA measurements (sometimes referred as TDOA calculations) can still correct for such lack of certainty.

While TOA and TDOA solutions are capable of providing a first order position estimate, these solutions are limited by the fact that the base stations may not be capable of providing a precise emitter location. Further, the base stations may not have line-of-sight to a UE, may have bad channels, or there may be other effects such as geometric-dilution-of-precision (GDOP) (i.e., error propagation as a mathematical effect of device topology on positional measurement precision). Still further, there are many places where wireless networks have less than complete coverage (e.g., forests, national parks, oceans, or the like). As noted, there may be instances where mobile radio network nodes such as drones can act as anchor nodes, relay nodes, or base stations. However, to get proper position estimates from such mobile radio network nodes, they must be time synchronized and know each other's relative position. For example, each nanosecond loss of time synchronization translates into thirty centimeters (30 cm) of positioning estimation error. A time precision error of more than a few hundred nanoseconds is common in commercially-deployed mobile networks.

It should be appreciated that performance when positioning through a mobile radio network node depends on environmental conditions such as signal hearability and propagation channel conditions. For example, even in regions of high coverage, multipath reception of a signal at the UE or lack of a clear line-of-sight may reduce the position estimate accuracy.

Exemplary aspects of the present disclosure focus on knowing the positions of the mobile nodes with sufficient precision such that the mobile radio network nodes accurately know their own absolute position as well as their position relative to other mobile nodes to assist in location services for UEs and particularly for rescue services. In exemplary aspects, the positions of the mobile radio network nodes are determined and the mobile radio network nodes are time synchronized. Then, locations of UEs are determined. The mobile radio network nodes may be air, land, or water-borne (e.g., mounted on drones, trains, boats, planes, automobiles, or the like). The UE to be located may be a wide range of devices such as emergency transmitters, mobile phones, simple sensor nodes, and other Internet of Things (IoT) devices.

While the present disclosure contemplates that the network nodes (e.g., fixed, mobile, radio access, or otherwise) that are being used to locate a target UE) be time synchronized, the present disclosure does not require the target UE to be time synchronized with the network. This non-requirement allows accurate positioning of simpler low-power emitters. Further, processing may be done in the mobile radio network node or other mobile node and thus does not require any backhaul infrastructure for time synchronization. Still further, coordinated mobility between the network nodes, and particularly among the mobile radio network nodes, allows relative positioning to maximize time synchronization precision for improved positioning of emitter nodes. Note also that the processes disclosed herein may be deployed as a stand-alone service or as an add-on to any existing positioning techniques already available such as LTE or GNSS positioning. Thus, positioning may be made available where no mobile or GNSS coverage exists or a coverage area of an existing positioning service may be extended.

One specifically contemplated use case is, as noted, rescue services. Rescue personnel may have UEs that transmit and receive according to the present disclosure to facilitate tracking the rescue personnel in remote areas or areas where conditions are such that conventional positioning solutions are inadequate.

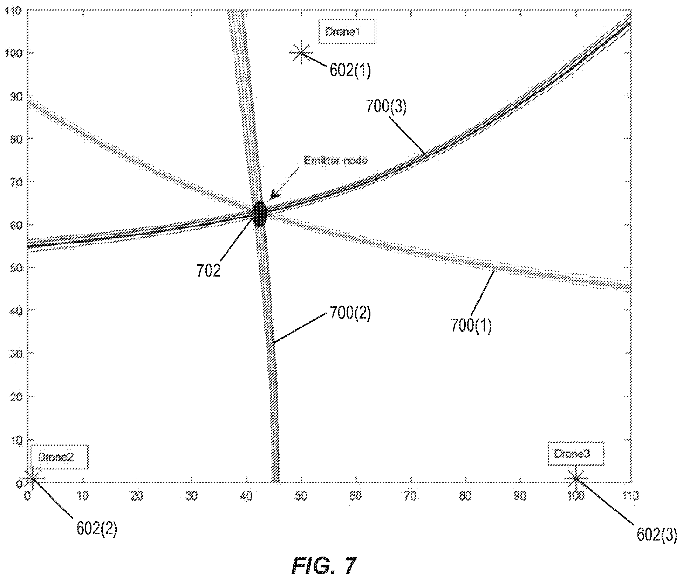

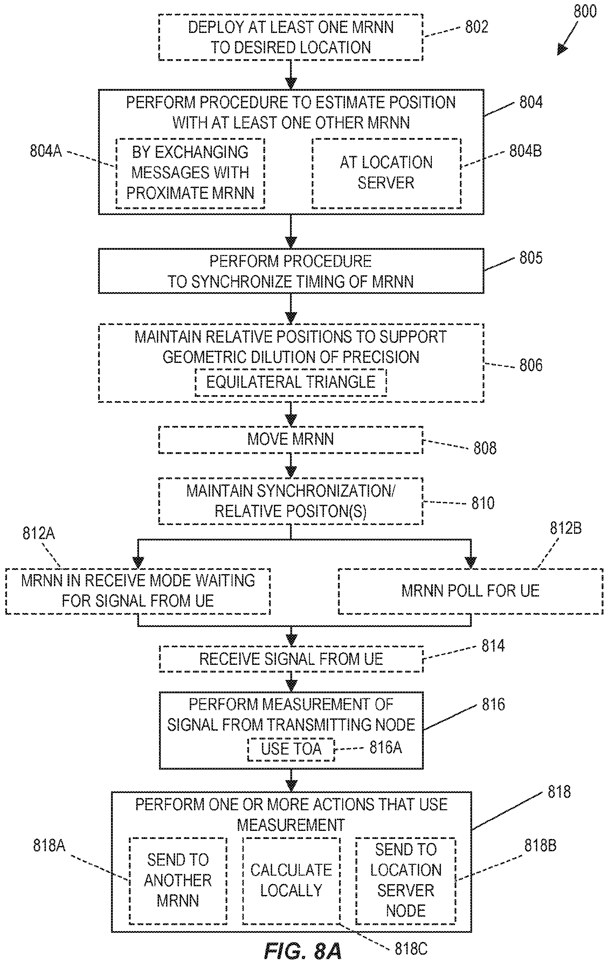

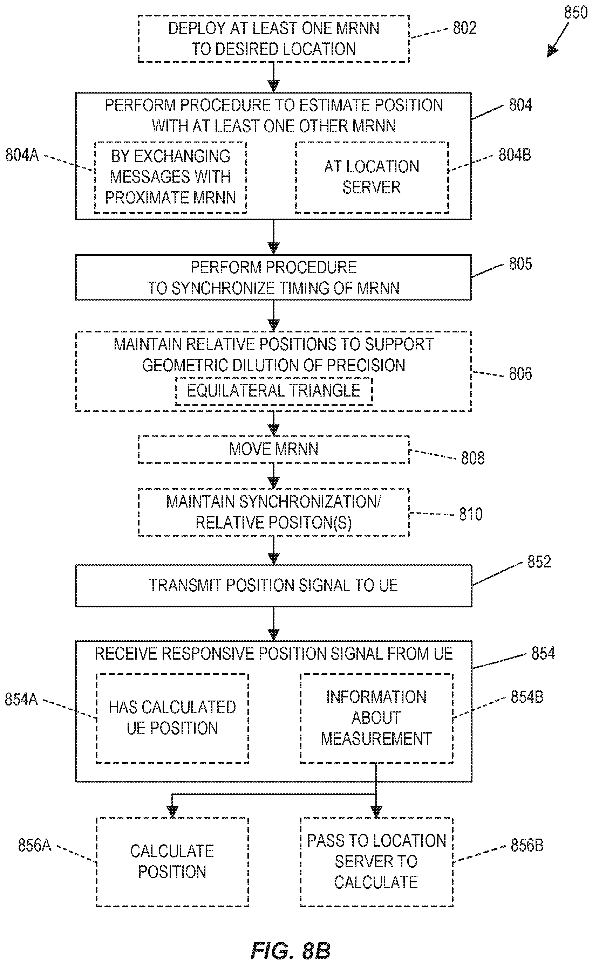

While more detail is provided below with reference to Figure 8, a brief overview of how exemplary aspects of the present disclosure work are provided with reference to Figures 6 and 7. To facilitate the positioning of the present disclosure, a system 600 of mobile radio network nodes 602(1)-602(N) (generically mobile radio network node 602) is deployed as illustrated in Figure 6. A UE 604 is positioned within the system 600. Initially, the mobile radio network nodes 602(1)-602(N) determine their positions relative to one another. That is, each mobile radio network node 602 should be able to estimate a position of other mobile radio network nodes within line-of-sight with respect to itself. The positioning can be absolute as in the GNSS and longitude/latitude or relative such that the mobile radio network nodes know where they are positioned relative to one another without a specific external reference point. The position estimations may be performed using TOA measurements and/or TDOA calculations based on TOA measurements between the mobile radio network nodes 602(1)-602(N) or other positioning technique as needed or desired. In an exemplary aspect, the mobile radio network nodes 602 may be connected to a wireless network and the wireless network can play a role in determining positions by providing fixed network nodes (e.g., base stations 202) that may use multilateration or other similar technique to locate the mobile radio network nodes 602.

In addition, the mobile radio network nodes 602 may be able to perform over-the-air time synchronization.

Alternatively, both positioning estimation and time synchronization may be accomplished using precision time protocol (PTP) with measurements shared between the mobile radio network nodes 602. Using PTP operates as follows: the mobile radio network node 602(1) and mobile radio network node 602(2) run PTP. From the PTP measurements, the parameters $\alpha_{12}$, $\beta_{12}$, $\rho_{12}$ can be estimated. $\alpha_{12}$ is the clock skew between clocks of the mobile radio network node 602(1) and the mobile radio network node 602(2). $\beta_{12}$ is the time offset between the mobile radio network node 602(1) and the mobile radio network node 602(2) when the PTP measurements were taken, and $\rho_{12}$ is the distance between the mobile radio network node 602(1) and the mobile radio network node 602(2).

PTP measurements are repeated sequentially between mobile radio network nodes 602(1)-602(N) pairwise. The set of parameters available after the PTP is run pairwise among three mobile radio network nodes 602 are summarized in Table 1 below:

**Table 1**

| Nodes 1 and 2 | Nodes 1 and 3 | Nodes 2 and 3 |
|---|---|---|
| $\alpha_{12}$, $\beta_{12}$, $\rho_{12}$ | $\alpha_{13}$, $\beta_{13}$, P13 | $\alpha_{23}$, $\beta_{23}$, P23 |

Mobile radio network nodes 602 communicate and share their measurements with each other in a distributed setup where the mobile radio network nodes 602 run the positioning algorithms. In a centralized setting, the mobile radio network nodes 602 communicate the measurements to a central server such as the location server 216 through a connected base station such as base station 202-1. While it is contemplated that mobile radio network nodes 602 take the PTP measurements, one (or more) of the nodes involved in taking such PTP measurements may be fixed.

Knowing all the respective distances in the network, the relative positions of the mobile radio network nodes 602 can be estimated in a distributed fashion or in a centralized fashion (e.g., at the location server 216). The relative positions can be estimated using any of the several known techniques like least squares minimization, maximum likelihood techniques, or the like. One of the mobile radio network nodes 602 can be the reference zero coordinate, and positions of the other mobile radio network nodes 602 can be estimated with respect to that reference zero coordinate. Thus, knowing the relative positions as used herein means knowing positions relative to one another. This relative position fix is contrasted with an absolute position which, as used herein is defined to be an absolute position on a predefined coordinate system such as longitude/latitude or the like.

Once the relative positions and the relative time parameters of all the mobile radio network nodes 602 are estimated, the mobile radio network nodes 602 are ready to receive the measurements from an emitter, namely UE 604 whose location needs to be estimated. To this end, the mobile radio network nodes 602 may move from an initial position (e.g., a hangar or garage where the mobile radio network nodes 602 are recharged, refueled, have maintenance performed, or the like) to a second region in the vicinity of the location where the UE 604 is expected to be found (e.g., a national park where someone is lost, a collapsed building, or the like to continue the rescue services example).

The UE 604 may periodically emit or transmit a signal. This signal does not have to be defined for the present disclosure to work. However, the signal may be a periodic signal at a fixed frequency such as might be created by a diode transmitter. Alternatively, the signal may be a modulated signal that has information embedded therein such as an identifier. The precise nature of the signal is not critical to the present disclosure. Likewise, this signal does not have to be synchronized with any signaling scheme used by the network. For the sake of illustration, this signal may be a PING. Each of the mobile radio network nodes 602(1)-602(N) that is within line-of-sight should receive the PING from the UE 604. On receipt, each of the mobile radio network nodes 602(1)-602(N) may measure the time of arrival with respect to an internal clock. For the sake of example, these measurements are $toa_1$, $toa_2$, and $toa_3$.

Time difference of arrival (TDOA) measurements (sometimes referred to as TDOA calculations) are generated from the TOA measurements. The TDOA measurements are corrected with the relative clock parameters. As shown below:

$$tdoa_{12} = toa_1 - toa_2 - \alpha_{12} \Delta - \beta_{12}$$

$$tdoa_{13} = toa_1 - toa_3 - \alpha_{13} \Delta - \beta_{13}$$

$$tdoa_{23} = toa_2 - toa_3 - \alpha_{23} \Delta - \beta_{23}$$

From the TDOA measurements, an estimated position of the UE 604 may be calculated as generally shown in Figure 7, where hyperbolas 700(1)-700(3) intersect at UE node 702 that corresponds to a location of the UE 604 (Figure 6). It should be appreciated that there are many conventional techniques for determining location from TDOA measurements.

It should be appreciated that the present disclosure embraces the concept of first locating the mobile radio network nodes 602, and then locating the UE. Thus, there are two uses of position estimation algorithms. As noted, the initial use is to locate the mobile radio network nodes 602(1)-602(N) relative to one another and then to estimate the position of the UE 604.

While the above description provides one way that the location of a UE 604 may be determined, Figures 8A and 8B illustrate through flowcharts processes 800 and 850, respectively, for position determination. Process 800 assumes that the mobile radio network nodes 602 (abbreviated MRNN in Figures 8A and 8B) do the calculations, and the process 850 assumes that the UE 604 does some of the position calculations.

In this regard, the process 800 of Figure 8A begins with one or more mobile radio network nodes 602(1)-602(N) being deployed to a desired location (block 802). In an exemplary aspect, the desired location is a location under rescue (i.e., subject to search and rescue operations). While the mobile radio network nodes 602(1)-602(N) are being deployed or after, the mobile radio network node 602(1) performs a procedure to estimate a position with at least one other mobile radio network node 602(2) (block 804). As noted above, this position estimation may be made by exchanging messages with proximate mobile radio network nodes (block 804A) or by passing location information and/or messages received from other mobile network nodes to a location server (e.g., location server 216) (block 804B). Note that, as explained above, while three nodes are generally required for two-dimensional positioning, the present disclosure contemplates that one or more of the nodes used to help provide positioning may be fixed, and therefore, block 804 contemplates position calculation with just at least one other mobile radio network node 602(2). It should also be appreciated that all the network nodes involved in the position calculation may be mobile network nodes. As used herein, estimating a position at block 804 also covers the situation where one of the nodes participating in the position estimation is fixed and "knows" its absolute position. However, even when an absolute position is known, a relative position may still be calculated as needed or desired. Note further that while the process 800 describes position calculation with at least one other mobile radio network node 602(2), it should be appreciated that the position calculation may be done with nodes that are more properly characterized as UE (albeit not the one to be located). For example, a cellular phone or some other UE may have its location determined by GPS, and this cellular phone may provide that GPS derived location to a mobile node as part of the mobile node's position calculations.

The network nodes including the mobile radio network node 602(1) then perform a procedure to synchronize timing therebetween (block 805). As noted above, this may be done through a procedure such as using PTP or other time synchronizing process.

Once the relative positions are known, in an exemplary aspect, the mobile radio network nodes 602(1)-602(N) may optionally maintain relative positions to support a geometric dilution of precision (GDOP) (e.g., in an ideal situation three mobile radio network nodes 602(1)-602(N) form approximately an equilateral triangle) (block 806). As used herein, approximately an equilateral triangle means a triangle having at least one interior angle between fifty and seventy degrees. What should be avoided, if possible, is a line configuration, where three or more nodes are in a line or in a "flat" such that two of the interior angles of such a triangle are both less than fifteen degrees. Such a line or flat triangle configuration introduces greater uncertainty in position determination and is more likely to suffer from single object blockages which prevent line of sight to a UE whose position is to be determined.

It should be appreciated that the mobile radio network nodes 602(1)-602(N) may move (block 808) after synchronization, either in response to environmental conditions, to be closer to an area of interest, or for other reasons. However, the mobile radio network nodes 602(1)-602(N) may maintain timing synchronization and relative positions (block 810). Alternatively, if relative positions cannot be maintained (e.g., some environmental or geographical feature precludes maintaining the relative positions), the mobile radio network nodes 602(1)-602(N) may update the position calculations such that the mobile radio network nodes 602(1)-602(N) still "know" respective positions so that further position calculations may be performed in furtherance of locating the UE. Note that movement may occur at any time during the process 800 or the process 850.

Regardless of movement, in a first exemplary aspect of the process 800, the mobile radio network nodes 602(1)-602(N) are in a receive mode waiting for a signal from the UE 604 (block 812A). This signal may be PING as previously described, a wideband, and/or an ultrawideband (UWB) signal. Alternatively, one or more of the mobile radio network nodes 602(1)-602(N) may poll for the UE to respond (block 812B).

The transmitting node of the device or person to be located (e.g., UE 604) may send a signal, and the mobile radio network node 602(1) receives the signal from the transmitting node (e.g., UE 604) (block 814) and performs a measurement of the signal from the transmitting node (block 816). In an exemplary aspect the measurement is a TOA measurement (block 816A) of the signal.

The process 800 continues by the mobile radio network node 602(1) performing one or more actions that use the measurement of the signal (block 818). In a first exemplary aspect, the mobile radio network node 602(1) sends the measurement of the signal to another mobile radio network node (block 818A). Alternatively, the mobile radio network node 602(1) may send the measurement of the signal to a location server node (e.g., location server 216) (block 818B). In these two possibilities, the other node (e.g., a different mobile radio network node 602(N) or the location server 216) may perform additional calculations such as calculating a TDOA measurement and calculate a position of the UE 604 therefrom. As a third option, the action of the mobile radio network node 602(1) is to receive further measurements of signals from other network nodes and calculate the position of the UE 604 locally (i.e., in the mobile radio network node 602(1)) (block 818C).

The process 850 of Figure 8B is similar in that the mobile radio network nodes initially follow the same steps of blocks 802-810 as process 800. However, in process 850, the UE 604 handles some of the processing required to calculate a position. Thus, while process 800 may use an uplink time difference of arrival (U-TDOA) technique (see for example, 3GPP REL-11) to locate the UE 604, the process 850 is more similar to an observed time difference of arrival (OTDOA) technique (see for example, 3GPP REL-9). Thus, in the process 850, the mobile radio network node 602 transmits a signal (referred to herein as a position signal) to the UE 604 (block 852). The position signal may include information about the mobile radio network node 602 such as an identifier, a time that the signal was sent relative to a system clock, or other information as needed or desired. The UE 604 performs a measurement on the position signal from the mobile radio network node 602 and sends back a responsive position signal to the mobile radio network node 602, which receives the responsive position signal from the UE 604 (block 854). At its simplest, the UE 604 may act like a radio frequency identifier tag and merely parrot back any received position signal, potentially appending or prepending a UE identifier if needed or desired. In such a case, it is readily apparent that the precise nature of the position signal is not critical to the present disclosure. In a second exemplary aspect, the UE 604 may decode incoming signals and/or derive sufficient information to take a TOA measurement from one or more mobile radio network nodes 602(1)-602(N) and from these TOA measurements, calculate a TDOA between incoming signals, which coupled with position information from the mobile radio network nodes 602(1)-602(N) may allow the UE 604 to calculate the UE 604 position (block 854A). In this exemplary aspect, the responsive position signal is the position of the UE 604. Again, this may be very similar to the OTDOA technique set forth in 3GPP REL-9. In a third exemplary aspect, the UE 604 may still decode incoming signals and/or derive sufficient information to take a TOA measurement from one or more mobile radio network nodes 602(1)-602(N) and from these TOA measurements, may calculate a TDOA between incoming signals. In this exemplary aspect, the responsive position signal merely includes information about the measurement taken by the UE 604 (block 854B) (e.g., the TOA measurements or the calculated TDOA measurements).

In the latter case, the mobile radio network node 602 may calculate the UE 604 position (block 856A) or may pass the information about the measurement to a location server for calculation of the position (block 856B).

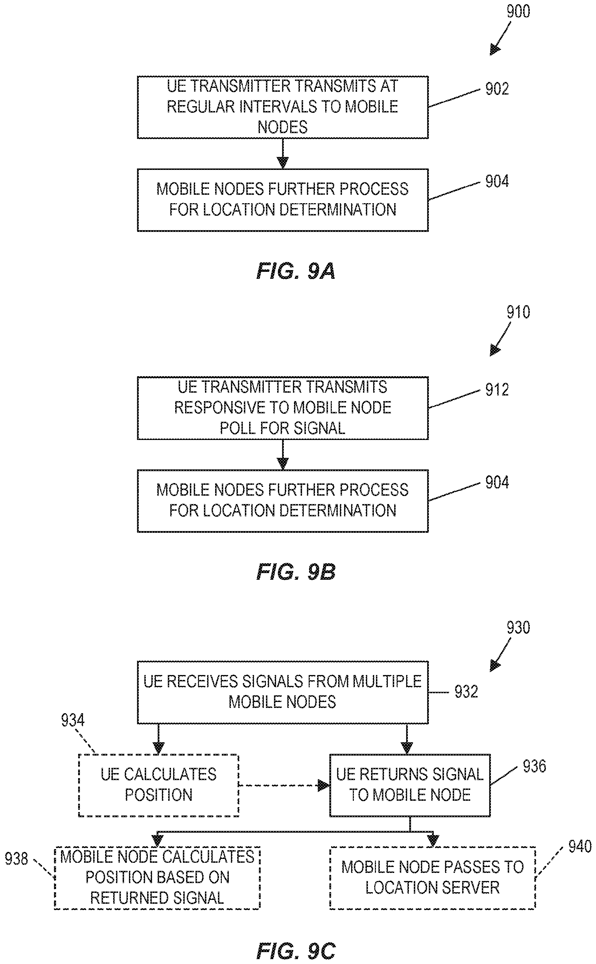

On the other side, there are a variety of ways the UE 604 may operate as illustrated by flowcharts in Figures 9A-9C. In this regard, Figure 9A illustrates a process 900 where the UE transmitter transmits a signal or signals at regular intervals to the mobile radio network nodes 602 (block 902), and the mobile radio network nodes 602 further process the signal for location determination (block 904). This situation corresponds to block 804A.

In an alternate aspect, illustrated in Figure 9B, in process 910, the UE transmitter transmits a signal or signals responsive to a mobile radio network node's polling (block 912). The mobile radio network nodes 602 receive the signal(s) transmitted by the UE and perform further processing for location determination (block 914). This situation corresponds to block 804B.

In still another alternate aspect, illustrated in Figure 9C, in process 930, the UE 604 receives signals from multiple mobile radio network nodes 602 (block 932). The UE 604 may optionally calculate its position based on the received signals (block 934) and return a signal having information about the calculated position to the mobile radio network nodes 602 (block 936), or the UE 604 may merely return information about the received signals to the mobile radio network nodes at block 936. If the UE 604 did not calculate a position, the mobile radio network nodes 602 may calculate a position of the UE based on the returned signal (block 938) or may pass the signals to a location server for position determination (block 940).

It should be appreciated that while the above discussion assumes that the various signals exchanged are cellular type signals, the present disclosure is not so limited. Bluetooth, WIFI, and the like may also be used. Further, range finding lasers may also be used among the mobile network nodes to help find relative positions therebetween. Such alternate arrangement may be particularly useful in areas with no other positioning methods (e.g., basements, mines, or deep building interiors).

In still another possible aspect, the mobile radio network nodes may be initialized at manufacturing or in a preliminary controlled environment (e.g., a lab) before sending them out. Such approach may be appropriate for simpler mobile network nodes which may not have over the air (OTA) time synchronization capabilities. Likewise, this approach may be appropriate for mobile network nodes equipped with a high-quality oscillator with a good holdover capability so that drift is minimized.

In still another aspect, the mobile radio network nodes 602(1)-602(N) and one or more self-backhauled mobile radio network nodes may perform TDOA measurements to position other mobile phones/UE within the vicinity. As is understood in the cellular industry, backhaul is a term used to refer to getting data back to the core network. Thus, a self-backhauled node is capable of getting data back to the core network. Thus, one exemplary such self-backhauled mobile radio network node would be a mobile radio network node with base station capabilities that has line of sight to a fixed network node that is part of the core network. This approach may allow existing networks to employ already positioned UEs or self-backhauled nodes to further locate a wider range of emitter nodes (e.g., Bluetooth nodes) without positioning capability.

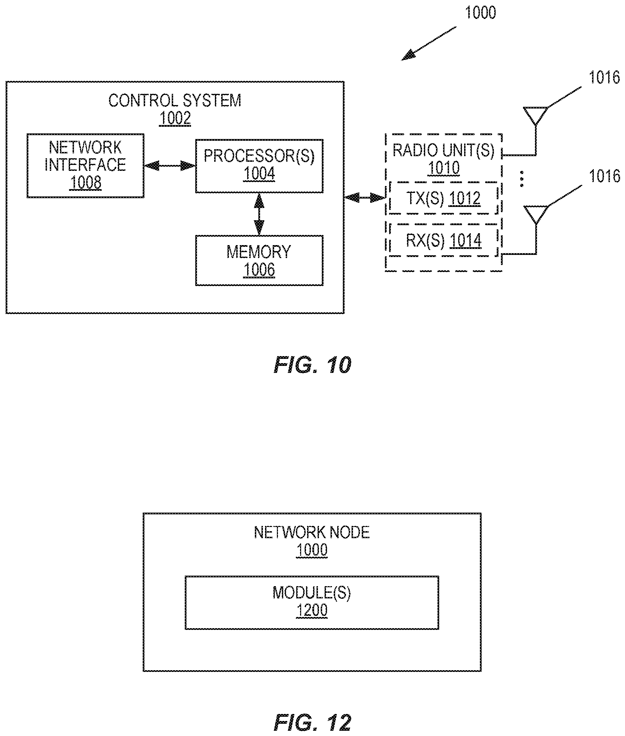

Figure 10 is a schematic block diagram of a radio access node 1000 according to some embodiments of the present disclosure. The radio access node 1000 may be, for example, a base station 202, 206, or any of the mobile radio network nodes 602. As illustrated, the radio access node 1000 includes a control system 1002 that includes one or more processors 1004 (Application Specific Integrated Circuits, Field Programmable Gate Arrays, and/or the like), memory 1006, and a network interface 1008. The one or more processors 1004 are also referred to herein as processing circuitry. In addition, the radio access node 1000 includes one or more radio units 1010 that each include one or more transmitters 1012 and one or more receivers 1014 coupled to one or more antennas 1016. The radio units 1010 may be referred to as, or be part of, radio interface circuitry. In some embodiments, the radio unit(s) 1010 is external to the control system 1002 and connected to the control system 1002 via, e.g., a wired connection. However, in some other embodiments, the radio unit(s) 1010 and potentially the antenna(s) 1016 are integrated together with the control system 1002. The one or more processors 1004 operate to provide one or more functions of a radio access node 1000 as described herein. In some embodiments, the function(s) are implemented in software that is stored, e.g., in the memory 1006 and executed by the one or more processors 1004.

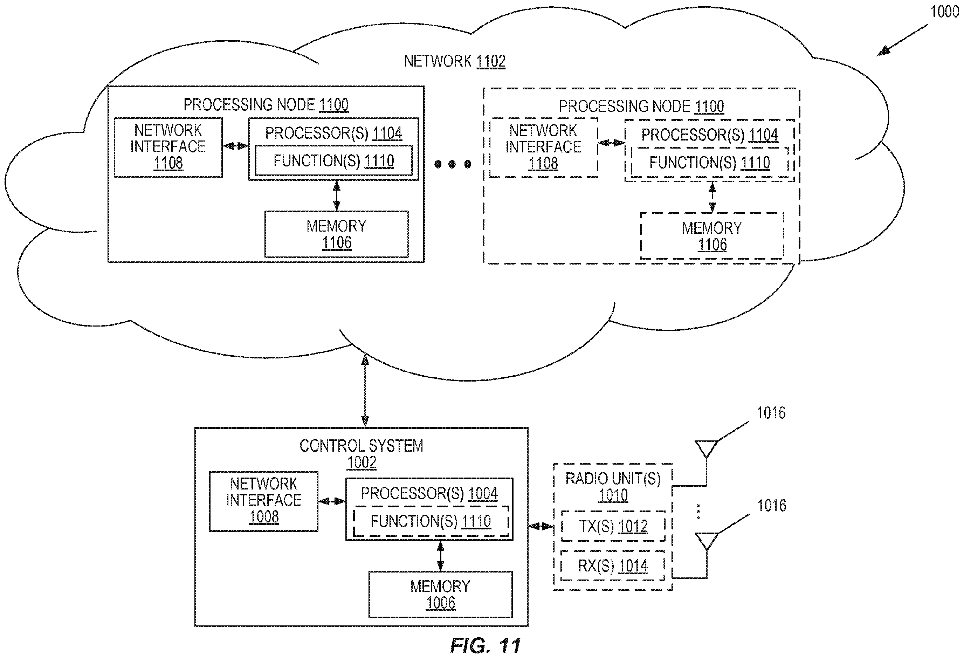

Figure 11 is a schematic block diagram that illustrates a virtualized embodiment of the radio access node 1000 according to some embodiments of the present disclosure. This discussion is equally applicable to other types of network nodes. Further, other types of network nodes may have similar virtualized architectures.

As used herein, a "virtualized" radio access node is an implementation of the radio access node 1000 in which at least a portion of the functionality of the radio access node 1000 is implemented as a virtual component(s) executing on a physical processing node(s) in a network(s). As illustrated, in this example, the radio access node 1000 includes the control system 1002 that includes the one or more processors 1004, the memory 1006, and the network interface 1008, and the one or more radio units 1010 that each includes the one or more transmitters 1012 and the one or more receivers 1014 coupled to the one or more antennas 1016, as described above. The control system 1002 is connected to the radio unit(s) 1010 via, for example, an optical cable or the like. The control system 1002 is connected to one or more processing nodes 1100 coupled to or included as part of a network(s) 1102 via a network interface 1108. Each processing node 1100 includes one or more processors 1104, memory 1106, and a network interface 1108.

In this example, functions 1110 of the radio access node 1000 described herein (e.g., the location services) are implemented at the one or more processing nodes 1100 or distributed across the control system 1002 and the one or more processing nodes 1100 in any desired manner. In some particular embodiments, some or all of the functions 1110 of the radio access node 1000 described herein are implemented as virtual components executed by one or more virtual machines implemented in a virtual environment(s) hosted by the processing node(s) 1100. As will be appreciated by one of ordinary skill in the art, additional signaling or communication between the processing node(s) 1100 and the control system 1002 is used in order to carry out at least some of the desired location determination functions 1110. Notably, in some embodiments, the control system 1002 may not be included, in which case the radio unit(s) 1010 communicates directly with the processing node(s) 1100 via an appropriate network interface(s).

In some embodiments, a computer program including instructions which, when executed by at least one processor, cause the at least one processor to carry out the functionality of the radio access node 1000 or a node implementing one or more of the functions 1110 of the radio access node 1000 in a virtual environment according to any of the embodiments described herein is provided. In some embodiments, a carrier comprising the aforementioned computer program product is provided. The carrier is one of an electronic signal, an optical signal, a radio signal, or a non-transitory computer readable storage medium.

Figure 12 is a schematic block diagram of the radio access node 1000 (which as noted above may be a base station 202, 206, or any of the mobile radio network nodes 602) according to some other embodiments of the present disclosure. The radio access node 1000 includes one or more module(s) 1200, each of which is implemented in software. The module(s) 1200 provide the functionality of the radio access node 1000 described herein. This discussion is equally applicable to the processing node(s) 1100 of Figure 11 where the module(s) 1200 may be implemented at one of the processing nodes 1100 or distributed across multiple processing node(s) 1100 and/or distributed across the processing node(s) 1100 and the control system 1002.

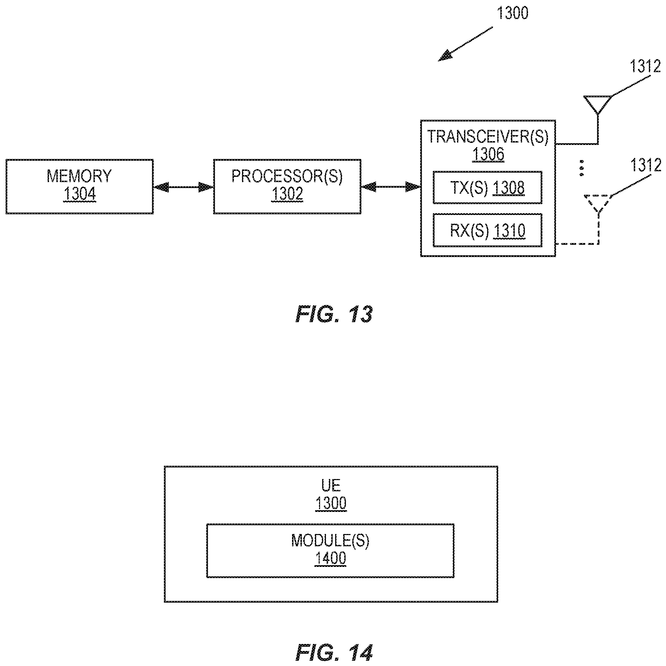

Figure 13 is a schematic block diagram of a UE 1300 according to some embodiments of the present disclosure. The UE 1300 may be the UE 604. As illustrated, the UE 1300 includes one or more processors 1302, memory 1304, and one or more transceivers 1306 each including one or more transmitters 1308 and one or more receivers 1310 coupled to one or more antennas 1312. The transceiver(s) 1306 includes radio-front end circuitry connected to the antenna(s) 1312 that is configured to condition signals communicated between the antenna(s) 1312 and the processor(s) 1302, as will be appreciated by one of ordinary skill in the art. The one or more processors 1302 are also referred to herein as processing circuitry. The transceivers 1306 are also referred to herein as radio circuitry. In some embodiments, the functionality of the UE 1300 described above may be fully or partially implemented in software that is, e.g., stored in the memory 1304 and executed by the processor(s) 1302. Note that the UE 1300 may include additional components not illustrated in Figure 13 such as, e.g., one or more user interface components, and/or the like and/or any other components for allowing input of information into the UE 1300 and/or allowing output of information from the UE 1300, a power supply, etc.

In some embodiments, a computer program including instructions which, when executed by at least one processor, causes the at least one processor to carry out the functionality of the UE 1300 according to any of the embodiments described herein is provided. In some embodiments, a carrier comprising the aforementioned computer program product is provided. The carrier is one of an electronic signal, an optical signal, a radio signal, or a computer readable storage medium.

Figure 14 is a schematic block diagram of the UE 1300 according to some other embodiments of the present disclosure. The UE 1300 includes one or more module(s) 1400, each of which is implemented in software. The module(s) 1400 provide the functionality of the UE 1300 described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessors or microcontrollers, as well as other digital hardware, which may include DSPs, special-purpose digital logic, and the like. The processing circuitry may be configured to execute program code stored in memory, which may include one or several types of memory such as ROM, RAM, cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • AP | Access Point |
| • ASIC | Application Specific Integrated Circuit |
| • BSC | Base Station Controller |
| • BTS | Base Transceiver Station |
| • CD | Compact Disk |
| • COTS | Commercial Off-the-Shelf |
| • CPE | Customer Premise Equipment |
| • CPU | Central Processing Unit |
| • D2D | Device-to-Device |
| • DAS | Distributed Antenna System |
| • DSP | Digital Signal Processor |
| • DVD | Digital Video Disk |
| • eNB | Enhanced or Evolved Node B |
| • E-SMLC | Evolved Serving Mobile Location Center |
| • FPGA | Field Programmable Gate Array |
| • GHz | Gigahertz |
| • gNB | New Radio Base Station |
| • GSM | Global System for Mobile Communications |
| • IoT | Internet of Things |
| • IP | Internet Protocol |
| • LEE | Laptop Embedded Equipment |
| • LME | Laptop Mounted Equipment |

| | |
|---|---|
| • LTE | Long Term Evolution |
| • M2M | Machine-to-Machine |
| • MANO | Management and Orchestration |
| • MCE | Multi-Cell/Multicast Coordination Entity |
| • MDT | Minimization of Drive Tests |
| • MIMO | Multiple Input Multiple Output |
| • MME | Mobility Management Entity |
| • MSC | Mobile Switching Center |
| • MSR | Multi-Standard Radio |
| • MTC | Machine Type Communication |
| • NB-IoT | Narrowband Internet of Things |
| • NFV | Network Function Virtualization |
| • NIC | Network Interface Controller |
| • NR | New Radio |
| • O&M | Operation and Maintenance |

(continued)

| | |
|---|---|
| • OSS | Operations Support System |
| • OTT | Over-the-Top |
| • PDA | Personal Digital Assistant |
| • P-GW | Packet Data Network Gateway |
| • RAM | Random Access Memory |
| • RAN | Radio Access Network |
| • RAT | Radio Access Technology |
| • RF | Radio Frequency |
| • RNC | Radio Network Controller |
| • ROM | Read Only Memory |
| • RRH | Remote Radio Head |
| • RRU | Remote Radio Unit |
| • SCEF | Service Capability Exposure Function |
| • SOC | System on a Chip |
| • SON | Self-Organizing Network |

| | |
|---|---|
| • UE | User Equipment |
| • USB | Universal Serial Bus |
| • V2I | Vehicle-to-Infrastructure |
| • V2V | Vehicle-to-Vehicle |
| • V2X | Vehicle-to-Everything |
| • VMM | Virtual Machine Monitor |
| • VNE | Virtual Network Element |
| • VNF | Virtual Network Function |
| • VoIP | Voice over Internet Protocol |
| • WCDMA | Wideband Code Division Multiple Access |
| • WiMax | Worldwide Interoperability for Microwave Access |

**Claims**

1. A method implemented in a mobile radio network node (602) of a wireless communication network (600), the method comprising:
   performing one or more procedures that:

   estimate (804) a position of the mobile radio network node relative to two or more additional nodes, wherein a position estimate of the two or more additional nodes is received by exchanging messages between the mobile radio network node and the two or more additional nodes, wherein said two or more additional nodes are mobile radio network nodes (602(2) and 602(N)); and
   synchronize timing (805) of the mobile radio network node relative to the two or more additional nodes, wherein the one or more procedures to estimate the position and synchronize the timing comprise a precision time protocol, PTP, procedure to make PTP measurements, and wherein the one or more procedures to estimate the position and synchronize the timing comprise using the PTP measurements to estimate clock skew between the mobile radio network node and one of the two or more additional nodes, estimate a time offset between the mobile radio network node and the one of the two or more additional nodes, and determine a distance between the mobile radio network node and the one of the two or more additional nodes;
   performing (816) a measurement on a signal from a transmitting node (604), the measurement being a time of arrival, TOA, of the signal at the mobile radio network node; and
   performing (818) one or more actions that use the measurement for calculating a position of the transmitting node (604).

2. The method of claim 1, wherein performing the one or more actions comprises providing (818A) the measurement to at least one other mobile radio network node for the at least one other mobile radio network node to calculate a position of the transmitting node.

3. The method of any one of claims 1 to 2, wherein performing the one or more actions comprises providing (818B) the measurement to a location server for the location server to calculate a position of the transmitting node.

4. The method of any one of claims 1 to 2, wherein performing the one or more actions comprises:

receiving additional measurements from the two or more additional nodes;
calculating a time difference of arrival, TDOA, measurement based on the measurement and the additional measurements; and
calculating a position of the transmitting node (818C).

5. The method of any one of claims 1 to 4, wherein the signal from the transmitting node is time synchronized with the mobile radio network node, or wherein the signal from the transmitting node is not time synchronized with the mobile radio network node.

6. The method of any one of claims 1 to 5, wherein the transmitting node is a user equipment, UE (604), and/or wherein the mobile radio network node is one of a drone, an automobile, a train, a vehicle, or an airplane, and/or wherein the two or more additional nodes are drones.

7. The method of any one of claims 1 to 6, further comprising positioning the mobile radio network node relative to two of the two or more additional nodes such that an equilateral triangle is approximately formed (806).

8. The method of any one of claims 1 to 7, further comprising moving (808) the mobile radio network node after performing the one or more procedures.

9. The method of claim 8, further comprising maintaining (806) relative positions between the mobile radio network node and the two or more additional nodes while moving.

10. The method of any one of claims 1 to 9, wherein the signal comprises an ultrawideband, UWB, signal.

11. A mobile radio network node (602(1)) configured to communicate with a transmitting node (604), said transmitting node (604) being a user equipment, UE (604), and to communicate with two or more additional nodes being mobile radio network nodes (602(2), 602(N)), the mobile radio network node comprising a network interface (1008) and a processor (1004) configured to cause the mobile radio network node to: perform the method of any of the claims 1 to 10.

12. A method implemented in a mobile radio network node (602) to locate a User Equipment, UE (604), comprising:

establishing (804) a position estimate of the mobile radio network node (602) relative to at least two other network nodes (602(2), 602(N)) that are mobile radio network nodes (602(2), 602(N));
synchronizing (805) a timing of the mobile radio network node (602) relative to the at least two other network nodes,
wherein establishing the position estimate and synchronizing the timing comprises a precision time protocol, PTP, procedure to make PTP measurements, wherein said PTP measurements are used to estimate clock skew between the mobile radio network node and one of the two other network nodes, estimate a time offset between the mobile radio network node and the one of the two other network nodes,
and determine a distance between the mobile radio network node and the one of the two other network nodes;
transmitting (852) a position signal from the mobile radio network node to the UE; and
receiving (854) a responsive position signal from the UE.

13. The method of claim 12, wherein the responsive position signal includes a calculated position of the UE (854A), or wherein the responsive position signal includes a measurement of the position signal (854B), the method further comprising calculating, at the mobile radio network node, the position of the UE (856A), or wherein the responsive position signal includes a measurement of the position signal (854B), the method further comprising sending the responsive position signal to a location server (216) to calculate the position of the UE (856B).

**14.** A mobile radio network node (602(1)) configured to communicate with a user equipment, UE (604), and to communicate with at least two other network nodes being mobile radio network nodes (602(2), 602(N)), the mobile radio network node comprising a network interface (1008) and a processor (1004) configured to cause the mobile radio network node to: perform the method of any of claims 12 through 13.

**Patentansprüche**

**1.** Verfahren, implementiert in einem Mobilfunknetzknoten (602) eines drahtlosen Kommunikationsnetzes (600), wobei das Verfahren Folgendes umfasst:
Durchführen einer oder mehrerer Vorgänge zum:

Schätzen (804) einer Position des Mobilfunknetzknotens relativ zu zwei oder mehreren zusätzlichen Knoten, wobei eine Positionsschätzung der zwei oder der mehreren zusätzlichen Knoten empfangen wird, indem Nachrichten zwischen dem Mobilfunknetzknoten und den zwei oder den mehreren zusätzlichen Knoten ausgetauscht werden, wobei die zwei oder die mehreren zusätzlichen Knoten Mobilfunknetzknoten (602(2) und 602(N)) sind; und
Synchronisieren einer Zeitgebung (805) des Mobilfunknetzknotens relativ zu den zwei oder den mehreren zusätzlichen Knoten,
wobei der eine oder die mehreren Vorgänge zum Schätzen der Position und zum Synchronisieren der Zeitgebung ein Precision-Time-Protocol-Verfahren, PTP-Verfahren, zum Durchführen von PTP-Messungen umfassen und wobei der eine oder die mehreren Vorgänge zum Schätzen der Position und zum Synchronisieren der Zeitgebung Verwenden der PTP-Messungen zum Schätzen einer Taktabweichung zwischen dem Mobilfunknetzknoten und einem der zwei oder der mehreren zusätzlichen Knoten, zum Schätzen eines Zeitversatzes zwischen dem Mobilfunknetzknoten und dem einen der zwei oder der mehreren zusätzlichen Knoten und zum Bestimmen einer Entfernung zwischen dem Mobilfunknetzknoten und dem einen der zwei oder der mehreren zusätzlichen Knoten umfassen;
Durchführen (816) einer Messung an einem Signal von einem Sendeknoten (604), wobei die Messung eine Ankunftszeit, TOA, des Signals bei dem Mobilfunknetzknoten ist; und
Durchführen (818) einer oder mehrerer Aktionen, welche die Messung zum Berechnen einer Position des Sendeknotens (604) verwenden.

**2.** Verfahren nach Anspruch 1, wobei das Durchführen der einen oder der mehreren Aktionen Bereitstellen (818A) der Messung an mindestens einen weiteren Mobilnetzknoten umfasst, damit der mindestens eine weitere Mobilnetzknoten eine Position des Sendeknotens berechnet.

**3.** Verfahren nach einem der Ansprüche 1 bis 2, wobei das Durchführen der einen oder der mehreren Aktionen Bereitstellen (818B) der Messung an einen Standortserver umfasst, damit der Standortserver eine Position des Sendeknotens berechnet.

**4.** Verfahren nach einem der Ansprüche 1 bis 2, wobei das Durchführen der einen oder der mehreren Aktionen Folgendes umfasst:

Empfangen zusätzlicher Messungen von den zwei oder den mehreren zusätzlichen Knoten;
Berechnen einer Ankunftszeitdifferenz-Messung, TDOA-Messung, basierend auf der Messung und den zusätzlichen Messungen; und
Berechnen einer Position des Sendeknotens (818C).

**5.** Verfahren nach einem der Ansprüche 1 bis 4, wobei das Signal von dem Sendeknoten mit dem Mobilfunknetzknoten zeitsynchronisiert ist oder wobei das Signal von dem Sendeknoten nicht mit dem Mobilfunknetzknoten zeitsynchronisiert ist.

**6.** Verfahren nach einem der Ansprüche 1 bis 5, wobei der Sendeknoten eine Benutzereinrichtung, UE (604), ist und/oder wobei der Mobilfunknetzknoten eines aus einer Drohne, einem Automobil, einem Zug, einem Fahrzeug oder einem Flugzeug ist und/oder wobei die zwei oder die mehreren zusätzlichen Knoten Drohnen sind.

**7.** Verfahren nach einem der Ansprüche 1 bis 6, ferner umfassend Positionieren des Mobilfunknetzknotens relativ zu zwei der zwei oder der mehreren zusätzlichen Knoten derart, dass ungefähr ein gleichseitiges Dreieck gebildet wird (806).

8. Verfahren nach einem der Ansprüche 1 bis 7, ferner umfassend Bewegen (808) des Mobilfunknetzknotens nach dem Durchführen der einen oder der mehreren Vorgänge.

9. Verfahren nach Anspruch 8, ferner umfassend Aufrechterhalten (806) relativer Positionen zwischen dem Mobilfunknetzknoten und den zwei oder den mehreren zusätzlichen Knoten während des Bewegens.

10. Verfahren nach einem der Ansprüche 1 bis 9, wobei das Signal ein Ultrabreitband-Signal, UWB-Signal, umfasst.

11. Mobilfunknetzknoten (602(1)), der dazu konfiguriert ist, mit einem Sendeknoten (604) zu kommunizieren, wobei der Sendeknoten (604) eine Benutzereinrichtung, UE (604), ist, und mit zwei oder mehreren zusätzlichen Knoten zu kommunizieren, bei denen es sich um Mobilfunknetzknoten (602(2), (602(N)) handelt, wobei der Mobilfunknetzknoten eine Netzschnittstelle (1008) und einen Prozessor (1004) umfasst, die dazu konfiguriert sind, den Mobilfunknetzknoten zu Folgendem zu veranlassen:
Durchführen des Verfahrens nach einem der Ansprüche 1 bis 10.

12. Verfahren, implementiert in einem Mobilfunknetzknoten (602) zum Orten einer Benutzereinrichtung, UE (604), umfassend:

   Erstellen (804) einer Positionsschätzung des Mobilfunknetzknotens (602) relativ zu mindestens zwei weiteren Netzknoten (602(2), 602(N)), bei denen es sich um Mobilnetzknoten (602(2), 602(N)) handelt;
   Synchronisieren (805) einer Zeitgebung des Mobilfunknetzknotens (602) relativ zu den mindestens zwei weiteren Netzknoten,
   wobei das Erstellen der Positionsschätzung und das Synchronisieren der Zeitgebung ein Precision-Time-Protocol-Verfahren, PTP-Verfahren, zum Durchführen von PTP-Messungen umfasst, wobei die PTP-Messungen zum Schätzen einer Taktabweichung zwischen dem Mobilfunknetzknoten und einem der zwei weiteren Netzknoten, zum Schätzen eines Zeitversatzes zwischen dem Mobilfunknetzknoten und dem einen der zwei weiteren Netzknoten und zum Bestimmen einer Entfernung zwischen dem Mobilfunknetzknoten und dem einen der zwei weiteren Netzknoten verwendet werden;
   Senden (852) eines Positionssignals von dem Mobilfunknetzknoten an die UE; und
   Empfangen (854) eines Antwortpositionssignals von der UE.

13. Verfahren nach Anspruch 12, wobei das Antwortpositionssignal eine berechnete Position der UE (854A) beinhaltet oder wobei das Antwortpositionssignal eine Messung des Positionssignals (854B) beinhaltet, wobei das Verfahren ferner Berechnen, beim Mobilfunknetzknoten, der Position der UE (856A) umfasst, oder wobei das Antwortpositionssignal eine Messung des Positionssignals (854B) beinhaltet, wobei das Verfahren ferner Senden des Antwortpositionssignals an einen Standortserver (216) umfasst, um die Position der UE (856B) zu berechnen.

14. Mobilfunknetzknoten (602(1)), der dazu konfiguriert ist, mit einer Benutzereinrichtung, UE (604), zu kommunizieren und mit mindestens zwei weiteren Netzknoten zu kommunizieren, bei denen es sich um Mobilfunknetzknoten (602(2), (602(N)) handelt, wobei der Mobilfunknetzknoten eine Netzschnittstelle (1008) und einen Prozessor (1004) umfasst, die dazu konfiguriert sind, den Mobilfunknetzknoten zu Folgendem zu veranlassen:
Durchführen des Verfahrens nach einem der Ansprüche 12 bis 13.

**Revendications**

1. Procédé mis en œuvre dans un nœud de réseau radio mobile (602) d'un réseau de communication sans fil (600), le procédé comprenant :
l'exécution d'une ou de plusieurs procédures qui permettent :

   d'estimer (804) une position du nœud de réseau radio mobile par rapport à deux nœuds supplémentaires ou plus, dans lequel une estimation de position des deux nœuds supplémentaires ou plus est reçue par échange de messages entre le nœud de réseau radio mobile et les deux nœuds supplémentaires ou plus, dans lequel lesdits deux nœuds supplémentaires ou plus sont des nœuds de réseau radio mobile (602(2) et 602(N)) ; et de synchroniser la temporisation (805) du nœud de réseau radio mobile par rapport aux deux nœuds supplémentaires ou plus,

dans lequel les une ou plusieurs procédures pour estimer la position et synchroniser la temporisation comprennent une procédure de protocole temporel de précision, PTP, pour effectuer des mesures PTP, et dans lequel les une ou plusieurs procédures pour estimer la position et synchroniser la temporisation comprennent l'utilisation des mesures PTP pour estimer un décalage d'horloge entre le noeud de réseau radio mobile et l'un des deux noeuds supplémentaires ou plus, estimer un décalage temporel entre le noeud de réseau radio mobile et l'un des deux noeuds supplémentaires ou plus, et déterminer une distance entre le noeud de réseau radio mobile et celui des deux noeuds supplémentaires ou plus ;

l'exécution (816) d'une mesure sur un signal provenant d'un noeud de transmission (604), la mesure étant un temps d'arrivée, TOA, du signal au niveau du noeud de réseau radio mobile ; et

l'exécution (818) d'une ou de plusieurs actions qui utilisent la mesure pour calculer une position du noeud de transmission (604).

2. Procédé selon la revendication 1, dans lequel l'exécution des une ou plusieurs actions comprend la fourniture (818A) de la mesure à au moins un autre noeud de réseau radio mobile pour que l'au moins un autre noeud de réseau radio mobile calcule une position du noeud émetteur.

3. Procédé selon l'une quelconque des revendications 1 et 2, dans lequel l'exécution des une ou plusieurs actions comprend la fourniture (818B) de la mesure à un serveur de localisation pour que le serveur de localisation calcule une position du noeud émetteur.

4. Procédé selon l'une quelconque des revendications 1 et 2, dans lequel l'exécution des une ou plusieurs actions comprend :

la réception de mesures supplémentaires provenant des deux noeuds supplémentaires ou plus ;
le calcul d'une mesure de différence de temps d'arrivée, TDOA, sur la base de la mesure et des mesures supplémentaires ; et
le calcul d'une position du noeud de transmission (818C).

5. Procédé selon l'une quelconque des revendications 1 à 4, dans lequel le signal provenant du noeud émetteur est synchronisé temporellement avec le noeud de réseau radio mobile, ou dans lequel le signal provenant du noeud émetteur n'est pas synchronisé temporellement avec le noeud de réseau radio mobile.

6. Procédé selon l'une quelconque des revendications 1 à 5, dans lequel le noeud émetteur est un équipement utilisateur, UE (604), et/ou dans lequel le noeud de réseau radio mobile est l'un parmi un drone, une automobile, un train, un véhicule ou un avion, et/ou dans lequel les deux noeuds supplémentaires ou plus sont des drones.

7. Procédé selon l'une quelconque des revendications 1 à 6, comprenant en outre le positionnement du noeud de réseau radio mobile par rapport à deux des deux noeuds supplémentaires ou plus de sorte qu'un triangle équilatéral est approximativement formé (806) .

8. Procédé selon l'une quelconque des revendications 1 à 7, comprenant en outre le déplacement (808) du noeud de réseau radio mobile après avoir effectué les une ou plusieurs procédures.

9. Procédé selon la revendication 8, comprenant en outre le maintien (806) de positions relatives entre le noeud de réseau radio mobile et les deux noeuds supplémentaires ou plus lors du déplacement.

10. Procédé selon l'une quelconque des revendications 1 à 9, dans lequel le signal comprend un signal à bande ultralarge, UWB.

11. Noeud de réseau radio mobile (602(1)) configuré pour communiquer avec un noeud émetteur (604), ledit noeud émetteur (604) étant un équipement utilisateur, UE (604), et pour communiquer avec deux noeuds supplémentaires ou plus étant des noeuds de réseau radio mobile (602(2), 602(N)), le noeud de réseau radio mobile comprenant une interface réseau (1008) et un processeur (1004) configuré pour amener le noeud de réseau radio mobile à : exécuter le procédé selon l'une quelconque des revendications 1 à 10.

12. Procédé mis en œuvre dans un noeud de réseau radio mobile (602) pour localiser un équipement utilisateur, UE (604), comprenant :

l'établissement (804) d'une estimation de position du noeud de réseau radio mobile (602) par rapport à au moins deux autres noeuds de réseau (602(2), 602(N)) qui sont des noeuds de réseau radio mobile (602(2), 602(N)) ;

la synchronisation (805) d'une temporisation du noeud de réseau radio mobile (602) par rapport aux au moins deux autres noeuds de réseau,

dans lequel l'établissement de l'estimation de position et la synchronisation de la temporisation comprennent une procédure de protocole temporel de précision, PTP, pour effectuer des mesures PTP, dans lequel lesdites mesures PTP sont utilisées pour estimer le décalage d'horloge entre le noeud de réseau radio mobile et l'un des deux autres noeuds de réseau, estimer un décalage temporel entre le noeud de réseau radio mobile et l'un des deux autres noeuds de réseau, et déterminer une distance entre le noeud de réseau radio mobile et l'un des deux autres noeuds de réseau ;

la transmission (852) d'un signal de position du noeud de réseau radio mobile à l'UE ; et

la réception (854) d'un signal de position sensible provenant de l'UE.

13. Procédé selon la revendication 12, dans lequel le signal de position sensible comporte une position calculée de l'UE (854A), ou dans lequel le signal de position sensible comporte une mesure du signal de position (854B), le procédé comprenant en outre le calcul, au niveau du noeud de réseau radio mobile, de la position de l'UE (856A), ou dans lequel le signal de position sensible comporte une mesure du signal de position (854B), le procédé comprenant en outre l'envoi du signal de position sensible à un serveur de localisation (216) pour calculer la position de l'UE (856B).

14. Noeud de réseau radio mobile (602(1)) configuré pour communiquer avec un équipement utilisateur, UE (604), et pour communiquer avec au moins deux autres noeuds de réseau qui sont des noeuds de réseau radio mobile (602(2), 602(N)), le noeud de réseau radio mobile comprenant une interface réseau (1008) et un processeur (1004) configuré pour amener le noeud de réseau radio mobile à :

exécuter le procédé selon l'une quelconque des revendications 12 et 13.

*FIG. 1*

FIG. 2

*FIG. 3*

FIG. 4

*FIG. 5*

EP 4 022 336 B1

OTA TIME SYNCH AND RELATIVE POSITIONING

OTA TIME SYNCH AND RELATIVE POSITIONING

OTA TIME SYNCH AND RELATIVE POSITIONING

602(1)

600

602(2)

604

602(N)

*FIG. 6*

EP 4 022 336 B1

**FIG. 7**

EP 4 022 336 B1

800

DEPLOY AT LEAST ONE MRNN
TO DESIRED LOCATION
— 802

PERFORM PROCEDURE TO ESTIMATE POSITION
WITH AT LEAST ONE OTHER MRNN
— 804

804A — BY EXCHANGING
MESSAGES WITH
PROXIMATE MRNN

AT LOCATION
SERVER
— 804B

PERFORM PROCEDURE
TO SYNCHRONIZE TIMING OF MRNN
— 805

MAINTAIN RELATIVE POSITIONS TO SUPPORT
GEOMETRIC DILUTION OF PRECISION
EQUILATERAL TRIANGLE
— 806

MOVE MRNN
— 808

MAINTAIN SYNCHRONIZATION/
RELATIVE POSITON(S)
— 810

812A

MRNN IN RECEIVE MODE WAITING
FOR SIGNAL FROM UE

812B

MRNN POLL FOR UE

RECEIVE SIGNAL FROM UE
— 814

PERFORM MEASUREMENT OF
SIGNAL FROM TRANSMITTING NODE
USE TOA
— 816
—— 816A

PERFORM ONE OR MORE ACTIONS THAT USE
MEASUREMENT
— 818

818A —— SEND TO
ANOTHER
MRNN

CALCULATE
LOCALLY

SEND TO
LOCATION
SERVER
NODE
—— 818B

—— 818C

*FIG. 8A*

850

DEPLOY AT LEAST ONE MRNN
TO DESIRED LOCATION — 802

PERFORM PROCEDURE TO ESTIMATE POSITION
WITH AT LEAST ONE OTHER MRNN — 804

804A — BY EXCHANGING
MESSAGES WITH
PROXIMATE MRNN

AT LOCATION
SERVER — 804B

PERFORM PROCEDURE
TO SYNCHRONIZE TIMING OF MRNN — 805

MAINTAIN RELATIVE POSITIONS TO SUPPORT
GEOMETRIC DILUTION OF PRECISION
EQUILATERAL TRIANGLE — 806

MOVE MRNN — 808

MAINTAIN SYNCHRONIZATION/
RELATIVE POSITON(S) — 810

TRANSMIT POSITION SIGNAL TO UE — 852

RECEIVE RESPONSIVE POSITION SIGNAL FROM UE — 854

854A — HAS CALCULATED
UE POSITION

INFORMATION
ABOUT
MEASUREMENT — 854B

856A — CALCULATE
POSITION

PASS TO LOCATION
SERVER TO
CALCULATE — 856B

*FIG. 8B*

900

UE TRANSMITTER TRANSMITS AT REGULAR INTERVALS TO MOBILE NODES — 902

MOBILE NODES FURTHER PROCESS FOR LOCATION DETERMINATION — 904

*FIG. 9A*

910

UE TRANSMITTER TRANSMITS RESPONSIVE TO MOBILE NODE POLL FOR SIGNAL — 912

MOBILE NODES FURTHER PROCESS FOR LOCATION DETERMINATION — 904

*FIG. 9B*

930

UE RECEIVES SIGNALS FROM MULTIPLE MOBILE NODES — 932

934 — UE CALCULATES POSITION

UE RETURNS SIGNAL TO MOBILE NODE — 936

938 — MOBILE NODE CALCULATES POSITION BASED ON RETURNED SIGNAL

MOBILE NODE PASSES TO LOCATION SERVER — 940

*FIG. 9C*

*FIG. 10*

*FIG. 12*

FIG. 11

1300

1312

TRANSCEIVER(S)
1306

| MEMORY | | PROCESSOR(S) | | TX(S) 1308 |
| 1304 | | 1302 | | |

1312

RX(S) 1310

*FIG. 13*

UE
1300

MODULE(S)
1400

*FIG. 14*

**EP 4 022 336 B1**

## REFERENCES CITED IN THE DESCRIPTION

### Patent documents cited in the description

- US 20080103696 A1
- WO 2004019559 A2
- US 20110143770 A1